# EUROPÄISCHE PATENTSCHRIFT

(11) **EP 1 211 133 B1**
(45) Veröffentlichungstag und Bekanntmachung des Hinweises auf die Patenterteilung: **30.08.2006**
(21) Anmeldenummer: 01128198.7
(22) Anmeldetag: 28.11.2001
(51) Int. Cl.: B60R 1/04

(54) **Innenrückblickspiegel für Kraftfahrzeuge**
Vehicle internal rear view mirror
Rétroviseur intérieur de véhicule

(30) Priorität: 02.12.2000 DE 20020495 U; 04.05.2001 DE 20108205 U
(43) Veröffentlichungstag der Anmeldung: 05.06.2002
(73) Patentinhaber: Schefenacker Vision Systems Germany GmbH, 73730 Esslingen (DE)
(72) Erfinder: Waldmann, Bernd, 72622 Nürtingen (DE)
(74) Vertreter: Kohl, Karl-Heinz

(56) Entgegenhaltungen:
- EP-A- 0 434 453
- US-A- 5 448 397
- US-A- 5 790 298

## Beschreibung

Die Erfindung betrifft einen Rückblickspiegel für Fahrzeuge, vorzugsweise für Kraftfahrzeuge, nach dem Oberbegriff des Anspruches 1.

Bei elektrochromen Spiegeln (EC-Spiegel) befindet sich zwischen dem Spiegelglas und dem Deckglas eine Dichtung. Damit sie nicht durch das Deckglas hindurch von außen sichtbar ist, ist der Rahmen des Gehäuses so weit heruntergezogen, daß er in Blickrichtung auf das Spiegelglas vor der Dichtung liegt und diese abdeckt.

Ein Gattungsgemäßer Rückblickspiegel ist aus EP 0434453 A bekannt.

Der Erfindung liegt die Aufgabe zugrunde, den gattungsgemäßen Rückblickspiegel so auszubilden, daß die Abdeckung der Dichtung im EC-Spiegel auf einfache Weise möglich ist.

Diese Aufgabe wird beim gattungsgemäßen Rückblickspiegel erfindungsgemäß mit den kennzeichnenden Merkmalen des Anspruches 1 gelöst.

Beim erfindungsgemäßen Rückblickspiegel, der sowohl ein Innen- als auch ein Außenrückblickspiegel sein kann, besteht der in Blickrichtung auf das Spiegelglas vor der Dichtung liegende Bereich des Gehäuserandes aus durchsichtigem Material. Rückseitig ist dieser Bereich mit einer Verspiegelung versehen, die verhindert, daß die Dichtung von außen sichtbar ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen:
- Fig. 1: in Vorderansicht einen erfindungsgemäßen Innenrückblickspiegel,
- Fig. 2: einen Querschnitt durch den Innenrückblickspiegel gemäß Fig. 1,
- Fig. 3: die Einzelheit A in Fig. 2 in vergrößerter Darstellung.

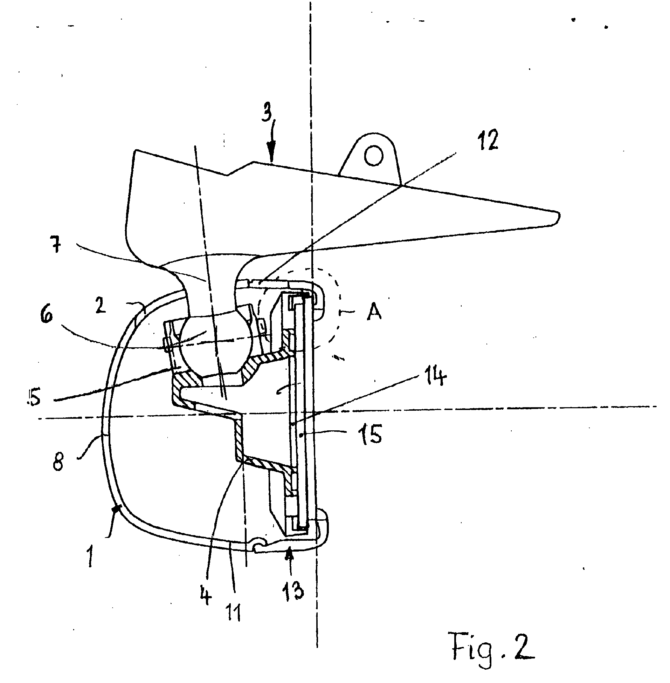

Der Innenrückblickspiegel hat ein Gehäuse 1, das an seiner Oberseite eine Durchgriffsöffnung 2 (Fig. 2) für einen Spiegelfuß 3 aufweist, mit dem der Innenspiegel im Fahrzeug in bekannter Weise befestigt ist. Im Gehäuse 1 ist ein Träger 4 vorgesehen, der eine Gelenkaufnahme 5 für eine Gelenkkugel 6 aufweist, die am freien Ende eines durch die Durchgriffsöffnung 2 ragenden Armes 7 des Spiegelfußes 3 vorgesehen ist. Über dieses Kugelgelenk läßt sich der Innenspiegel in bekannter Weise in bezug auf die Position des Kraftfahrzeuges einstellen.

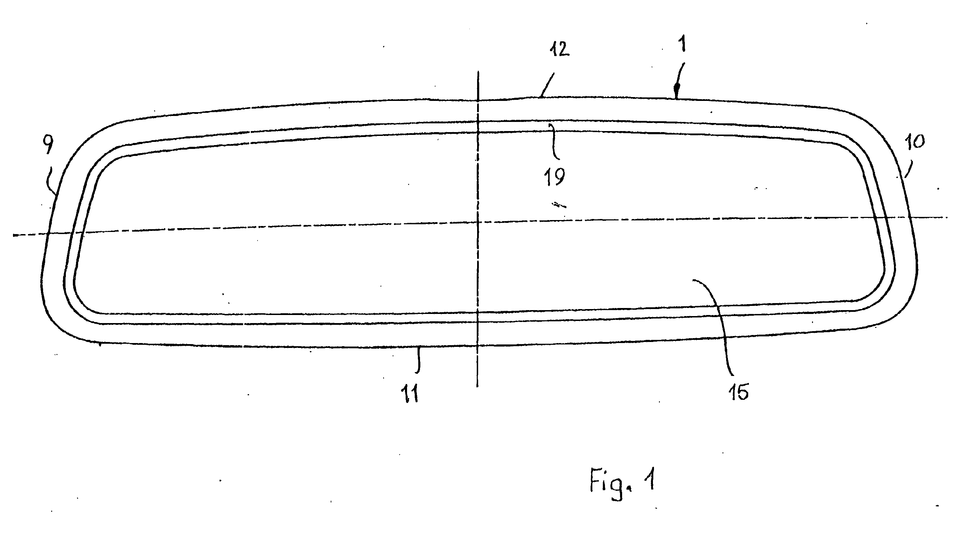

Das Gehäuse 1 ist im Querschnitt bauchig ausgebildet und hat in Vorderansicht (Fig. 1) etwa Rechteckform. Das Gehäuse 1 hat eine bauchige Rückwand 8, die in Seitenwände 9, 10 (Fig. 1), einen Boden 11 und eine Oberseite 12 übergeht. An den freien Enden der Gehäusewände 9 bis 12 schließt ein umlaufender Rahmen 13 an, der lösbar, aber auch fest mit den Gehäusewänden 9 bis 12 verbunden sein kann.

Am Träger 4 liegt ein Spiegelglas 14 an, auf dem sich ein Deckglas 15 befindet. Die beiden Gläser 14, 15 sind Teil eines EC-Spiegels. Zwischen dem Spiegelglas 14 und dem Deckglas 15 befindet sich eine umlaufende Dichtung 16, die ein Eindringen von Feuchtigkeit zwischen die beiden Gläser 14, 15 bzw. ein Austreten des EC-Mediums verhindert.

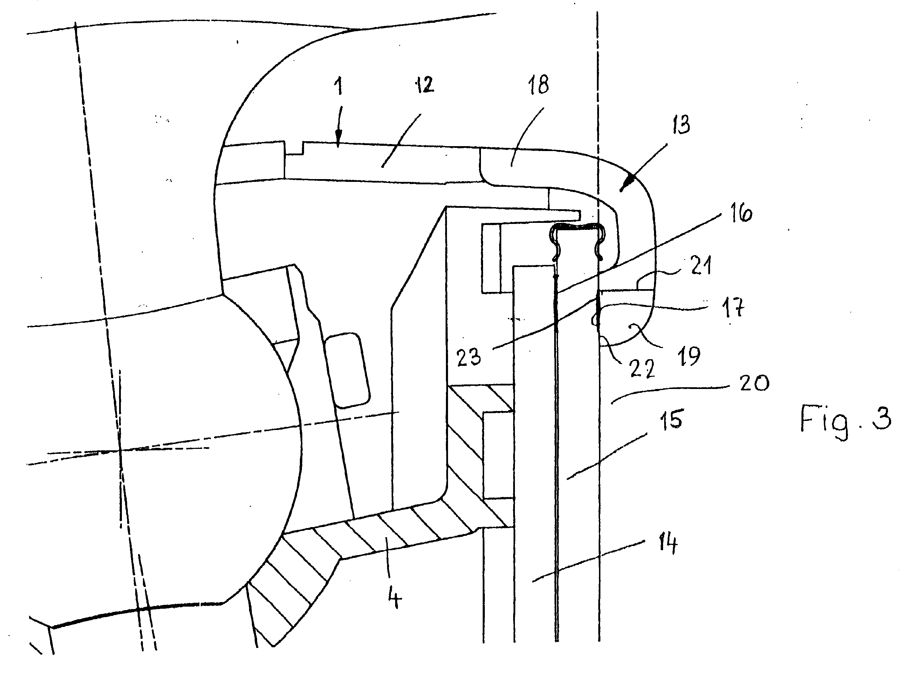

Der umlaufende Rahmen 13 übergreift mit seinem freien Ende den EC-Spiegel 14, 15 randseitig. Der Rahmen 13 liegt mit einer ebenen Fläche 17 (Fig. 3) flächig am Deckglas 15 an. Der EC-Spiegel 14, 15 wird auf diese Weise zwischen dem Träger 4 und dem Rahmen 13 gehalten. Der Rahmen 13 besteht aus zwei Rahmenteilen 18 und 19, von denen der innere Rahmenteil 19 eine Einbauöffnung 20 für den EC-Spiegel 14, 15 begrenzt. Der Rahmenteil 19 hat im Querschnitt etwa Viertelkreisform und liegt mit seinen ebenen Außenseiten am Deckglas sowie an einer ebenen Stirnseite 21 des Rahmenteiles 18 flächig an. Der Rahmen 13 bildet eine stetige Fortsetzung des Gehäuses 1, das heißt die Außenseiten des Gehäuses 1 und des Rahmens 13 gehen stufenlos ineinander über. Wie die Fig. 2 und 3 zeigen, übergreift der Rahmen 13 den EC-Spiegel 14, 15 mit Abstand und liegt lediglich mit der Anlagefläche 17 an der Außenseite des Deckglases 15 an.

Der an das Gehäuse 1 anschließende Rahmenteil 18 besteht aus undurchsichtigem Material, insbesondere aus einem entsprechenden Kunststoff. Dieses Material kann eingefärbt sein, beispielsweise im Farbton des Kraftfahrzeuges. Der Rahmenteil 19 hingegen besteht aus durchsichtigem, insbesondere glasklarem Material. Damit durch diesen Rahmenteil 19 hindurch die Dichtung 16 zwischen den beiden Gläsern 14, 15 nicht sichtbar ist, ist die am Deckglas 15 anliegende Rückseite 22 des Rahmenteiles 19 mit einer Verspiegelung 23 versehen. Sie ist so vorgesehen, daß sie, von außen gesehen, die Dichtung 16 abdeckt. Da der Rahmenteil 19 aus durchsichtigem, insbesondere glasklarem Material besteht, wirkt dieser Rahmenteil 19 nicht störend, da er sich nur wenig vom Deckglas 15 abhebt.

Es ist möglich, den an den Rahmenteil 19 anschließenden Bereich des Rahmenteiles 18 ebenfalls aus durchsichtigem, insbesondere glasklarem Material herzustellen. In diesem Falle ist die Verspiegelung 23 auch an der am Deckglas 15 anliegenden Innenseite dieses Bereiches des Rahmenteiles 18 vorgesehen. Die Verspiegelung 23 läßt sich einfach am Rahmen 13 anbringen und benötigt selbst keinen ins Gewicht fallenden Einbauraum. Die Verspiegelung 23 ist nur in diejenigen Bereichen des Rahmens 13 vorgesehen, durch die von außen die Dichtung 16 zwischen den beiden Gläsern 14, 15 des EC-Spiegels erkennbar sind. Solange der Rahmen 13 im Bereich vor der Dichtung 16 undurchsichtig ist, ist eine Verspiegelung 23 nicht notwendig.

Die in den Figuren 1 bis 3 beschriebene Spiegelausbildung kann selbstverständlich auch für Außenrückblickspiegel für Kraftfahrzeuge vorgesehen sein.

## Patentansprüche

1. Rückblickspiegel für Fahrzeuge, vorzugsweise Kraftfahrzeuge, mit einem Gehäuse (1), in dessen Aufnahmeöffnung (20) ein elektrochromer Spiegel eingesetzt ist, der ein Spiegelglas (14) und ein Deckglas (15) aufweist, zwischen denen im Randbereich zumindest über einen Teil des Umfanges wenigstens eine Dichtung (16) liegt, vor der ein den elektrochromen Spiegel übergreifender Rand des Gehäuses liegt, der die Dichtung von außen verdeckt,
**dadurch gekennzeichnet, daß** der im Bereich vor der Dichtung (16) liegende Bereich des Gehäuserandes (13) aus durchsichtigem Material besteht und rückseitig mit einer Verspiegelung (23) versehen ist.

2. Spiegel nach Anspruch 1,
**dadurch gekennzeichnet, daß** der Gehäuserand (13) Teil eines Rahmens ist, der die Aufnahmeöffnung (20) begrenzt.

3. Spiegel nach Anspruch 1 oder 2,
**dadurch gekennzeichnet, daß** der Gehäuserand (13) mit der Verspiegelung (23) flächig am Deckglas (15) anliegt.

4. Spiegel nach Anspruch 2 oder 3,
**dadurch gekennzeichnet, daß** der Rahmen (13) aus zwei Rahmenteilen (18, 19) besteht, die jeweils umlaufend ausgebildet sind.

5. Spiegel nach Anspruch 4,
**dadurch gekennzeichnet, daß** der innere Rahmenteil (19) zumindest im Bereich der Verspiegelung (23) aus durchsichtigem, insbesondere glasklarem Material besteht.

6. Spiegel nach Anspruch 4 oder 5,
**dadurch gekennzeichnet, daß** der äußere Rahmenteil (18) aus undurchsichtigem Material besteht.

7. Spiegel nach einem der Ansprüche 1 bis 6,
**dadurch gekennzeichnet, daß** der Rückblickspiegel ein Innen- oder Außenrückblickspiegel ist.

## Claims

1. Rear view mirror for vehicles, preferably motor vehicles, with a housing (1), into the receiving opening (20) of which an electrochromic mirror is inserted, the mirror having a mirror glass (14) and a cover glass (15) between which, in the edge region at least over part of the circumference, there is at least one seal (16) in front of which is situated an edge of the housing, the edge engaging over the electrochromic mirror and concealing the seal from the outside, **characterized in that** that region of the housing edge (13) which is situated in the region in front of the seal (16) is composed of transparent material and is provided on the rear side with a mirror coating (23).

2. Mirror according to Claim 1, **characterized in that** the housing edge (13) is part of a frame which bounds the receiving opening (20).

3. Mirror according to Claim 1 or 2, **characterized in that** the housing edge (13) rests together with the mirror coating (23) on the cover glass (15) in a planar manner.

4. Mirror according to Claim 2 or 3, **characterized in that** the frame (13) comprises two frame parts (18, 19) which are in each case of encircling design.

5. Mirror according to Claim 4, **characterized in that** the inner frame part (19) consists of transparent, in particular clear material, at least in the region of the mirror coating (23).

6. Mirror according to Claim 4 or 5, **characterized in that** the outer frame part (18) consists of opaque material.

7. Mirror according to one of Claims 1 to 6, **characterized in that** the rear view mirror is an internal or external rear view mirror.

## Revendications

1. Rétroviseur pour des véhicules, de préférence pour des véhicules automobiles, avec un boîtier (1) dans l'orifice de réception duquel (20) est inséré un miroir électrochrome, comportant une glace (14) et un verre couvrant (15), entre lesquels, dans la zone marginale, un joint (16) à l'avant duquel se situe un bord du boîtier chevauchant le miroir électrochrome, qui recouvre le joint par l'extérieur, se situe au moins sur une partie de la périphérie,
**caractérisé en ce que** la zone de bord du boîtier (13) qui située dans la zone à l'avant du joint (16) est en un matériau transparent et est munie d'une couche réfléchissante (23) sur sa face arrière.

2. Rétroviseur selon la revendication 1,
**caractérisé en ce que** le bord du boîtier (13) est un élément d'un cadre qui délimite l'orifice de réception (20).

3. Rétroviseur selon la revendication 1 ou 2,
**caractérisé en ce que** par la couche réfléchissante (23), le bord du boîtier (13) s'appuie en nappe sur le verre couvrant (15).

4. Rétroviseur selon la revendication 2 ou 3,
**caractérisé en ce que** le cadre (13) est composé de deux éléments de cadre (18, 19), qui sont conçus chacun sous forme périphérique.

5. Rétroviseur selon la revendication 4,
**caractérisé en ce qu'**au moins dans la zone de la couche réfléchissante (23), l'élément intérieur de cadre (19) est en un matériau transparent, notamment clair comme le verre.

6. Rétroviseur selon la revendication 4 ou 5,
**caractérisé en ce que** l'élément extérieur de cadre (18) est en un matériau opaque.

7. Rétroviseur selon l'une quelconque des revendications 1 à 6,
**caractérisé en ce que** le rétroviseur est un rétroviseur intérieur ou un rétroviseur extérieur.
